# EUROPEAN PATENT SPECIFICATION

(11) **EP 3 796 685 B1**
(45) Date of publication and mention of the grant of the patent: **23.04.2025**
(21) Application number: 19198982.1
(22) Date of filing: 23.09.2019
(51) Int. Cl.: H04W 4/46, H04W 4/02, G06N 20/10, H04L 41/147

(54) **A METHOD, A COMPUTER PROGRAM, AN APPARATUS, AND A VEHICLE FOR DETERMINING A REPRESENTATION OF A RADIO ENVIRONMENT OF A MOBILE TRANSCEIVER**
VERFAHREN, COMPUTERPROGRAMM, VORRICHTUNG UND FAHRZEUG ZUR BESTIMMUNG EINER DARSTELLUNG EINER FUNKUMGEBUNG EINES MOBILEN SENDEEMPFÄNGERS
PROCÉDÉ, PROGRAMME INFORMATIQUE, APPAREIL ET VÉHICULE PERMETTANT DE DÉTERMINER UNE REPRÉSENTATION D'UN ENVIRONNEMENT RADIO D'UN ÉMETTEUR-RÉCEPTEUR MOBILE

(43) Date of publication of application: 24.03.2021
(73) Proprietor: Volkswagen AG, 38440 Wolfsburg (DE)
(72) Inventor: Jornod, Guillaume, 10245 Berlin (DE); Pfadler, Andreas, 13359 Berlin (DE)

(56) References cited:
- WO-A1-2019/006085
- WO-A1-2019/133048
- WO-A2-2018/004296
- WO-A2-2018/125686
- US-A1- 2017 041 817
- US-A1- 2019 349 173

## Description

The present invention relates to a method, a computer program, an apparatus, and a vehicle for determining a representation of a radio environment of a mobile transceiver, more specifically, but not exclusively, to a concept for efficiently representing information on a radio environment status.

In the scope of cooperative driving, prediction of a future quality of service (QoS) may enable inter-vehicular application/communication when the QoS conditions vary in the radio environment. When no predictive QoS (PQoS) is provided an application can only react to variations and is therefore limited to lower bound performances of the communication system. PQoS systems can may on the vehicles/communication nodes with radio access technologies (RATs) such as LTE-V (Long Term Evolution-Vehicular) or 5G-V2X (5^{th} Generation-Vehicle-to-Everything) in their standalone modes, or IEEE 802.11p (Institute of Electrical and Electronics Engineers). Combinations of these technologies can also be applied in multi-RAT systems. In such pQoS systems, vehicles can exchange information about the surrounding communication environment in order to provide pQoS.

Document EP 2 555 569 B1 describes a method for controlling electronic data transmission between a mobile communication device located in a movable and/or moving vehicle and a mobile communication network. The method comprising the steps of obtaining location data and/or movement data relating to the current position of the vehicle, and calculating, based on the current position data, location and/or movement data relating to a predicted position of the vehicle. The method further comprises determining the current and predicting the future capacity situation of the mobile communication network and dynamically adapting network and service parameters associated with a mobile communication system based on the current and predicted position of the vehicle and based on the current and predicted future capacity situation of the mobile communication network.

Document US 9,992,701 B2 discloses an information handling system operating as a smart vehicle gateway. The system includes a wireless adapter for communicating with a wireless link and a storage device for storing a spatial-temporal user profile comprising wireless device usage trend data for a location in or near a predicted smart vehicle gateway path during a future time interval for a smart vehicle gateway. The smart vehicle gateway may operate to establish a wireless link on one of several WWAN link options as a home network via a programmable eSIM. The information handling system further includes a positional detector and an application processor that determines a trajectory estimation during a future time interval. Document US 2017/041817 A1 (SHOMURA YUSUKE [JP] ET AL) 9 February 2017 (2017-02-09) discloses a CQI distribution in the cells in regions subdivided into grid cells of a prescribed size. In particular, a wireless quality map information management table includes the ECGI for uniquely identifying a cell of the eNodeB, the position (latitude, longitude) of the grid cells, the size (length in the latitude direction, width in the longitude direction) of the grid cells, the CQI and a degree of congestion.

There is a demand for an improved concept for representing radio environment information. The invention is defined in the independent claims. Additional features of the invention are provided in the dependent claims.

Embodiments are based on the finding that information exchanged between vehicles may contain positions of the vehicles, frequency of the used radio, transmission rate and size of messages. Prediction models may apply statistical methods taking information about the surrounding environment as input. A majority of the statistical models used to predict a future QoS are restricted to a fixed number of inputs. For instance, a vector of predictors in a linear regression may have a fixed size. Another instance is the feature space of a support vector machine or multi-layer perceptron regressor, which is strictly defined in the design of the method. This may limit the applicability of these models to real life scenarios, where the number of surrounding communicating vehicles/devices can vary from 0 to thousands. At the same time, each vehicle may run varying numbers of applications. Additionally, the spatial distribution of these vehicles has a large influence on the results, requiring some ordering or abstraction. It is a finding that information on a radio environment determined at a mobile transceiver or vehicle may be generalized by introducing a spatial grid of cells. Information on the radio environment in the invention, is represented on a cell basis and hence activities of devices are summarized per cell.

Scalability of the information on the radio environment may now be determined by the number of cells (or spatial cell resolution) rather than by the number of active devices.

Embodiments provide a method for determining a representation of a radio environment of a mobile transceiver. The method comprises determining information on one or more active transceivers in the environment of the mobile transceiver. The method comprises generating a grid of the radio environment of the mobile transceiver. The grid comprises a plurality of adjoining cells. The method further comprises indicating an activity of the one or more active transceivers per cell in the grid. Embodiments therewith enable a more efficient representation of radio environment activities.

The determining of the information may comprise receiving messages from the one or more active transceivers. Embodiments may make use of messages exchanged between vehicles for traffic management purposes to derive the grid.

The method may comprise receiving information on a grid from another mobile transceiver. Embodiments may enhance the determination of activities in the radio environment by considering observations from surrounding transceivers.

In some embodiments the method further comprises transmitting information on the grid to another transceiver. Embodiments may enable a sharing mechanism for radio environment modeling of different transceivers.

The indicating may comprise assigning the one or more transceivers to one or more cells of the grid based on the locations of the one or more transceivers. Data compression may be achieved by assigning active radio sources to the cells of the grid and represent the radio environment by the grid.

For example, the indicating may comprise assigning information on frequency bands and/or radio access technologies of radio activity to the cells of the grid. Per cell of the grid activities may be further summarized per frequency band or RAT. Information may be represented more efficiently by considering only frequency bands/RATs with activity and skipping non-active frequency bands/RATs.

At least in some embodiments the indicating may comprise assigning information on a transmission frequency of radio activity to the cells of the grid. Information may be further compressed by representing multiple transceivers using the same frequency band by the respective frequency band.

Furthermore, the indicating may comprise assigning information on one or more message sizes transmitted by the one or more active transceivers to the cells of the grid. The message sizes may contribute to a more reliable prediction of an activity in a cell of the grid.

The indicating may further comprise assigning average information on messages sizes and transmission frequencies of the messages transmitted by the one or more active transceivers to the cells of the grid. Assigning averaged quantities to the cells may contribute to efficient representation of the radio environment.

In some further embodiments the mobile transceiver may be comprised in a vehicle and the one or more active transceivers may be further road users. Embodiments may particularly enable an efficient radio environment representation in the vehicular or traffic environment.

For example, the determining may comprise determining trajectories for the one or more active users. A prediction of a future radio situation may be enhanced by considering trajectories of the active radio transceivers.

Moreover, the method may comprise predicting a future grid based on the information on the trajectories of the one or more active users. A prediction of the future grid may further enhance radio communication.

The method may comprise predicting a future quality of service of a radio service of the mobile transceiver based on the grid. Predicting a further QoS may enable timely application adaptation.

Another embodiment is an apparatus for a mobile transceiver of a mobile communication system. The apparatus comprises one or more interfaces for communicating in a mobile communication system and a control module configured to carry out or perform one of the methods described herein.

A vehicle comprising the apparatus is yet another embodiment.

Embodiments further provide a computer program having a program code for performing one or more of the described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Some other features or aspects will be described using the following non-limiting embodiments of apparatuses or methods or computer programs or computer program products by way of example only, and with reference to the accompanying figures, in which:
Fig. 1 illustrates a block diagram of an embodiment of a method for determining a representation of a radio environment of a mobile transceiver;
Fig. 2 illustrates block diagram of an apparatus for a mobile transceiver and an embodiment of a vehicle;
Fig. 3 illustrates an initial situation in an embodiment;
Fig. 4 illustrates message description and grid separation in an embodiment;
Fig. 5 illustrates separation of different Radio Access Technologies in an embodiment;
Fig. 6 illustrates information aggregation per cell in an embodiment; and
Fig. 7 shows gathered cell information in an embodiment.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

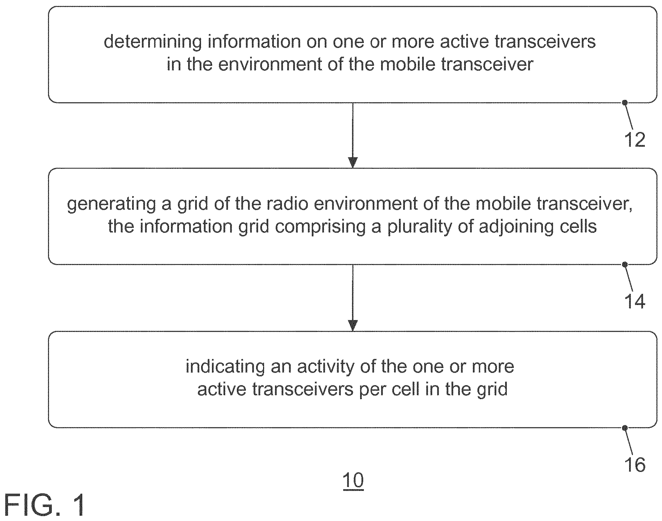

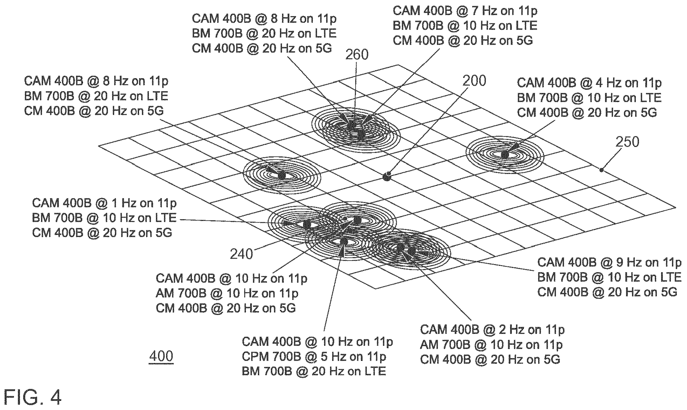

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" or "including", when used herein, specify the presence of stated features, integers, steps, operations, elements or components, but do not preclude the presence or addition of one or more other features, integers, steps, operations, elements, components or groups thereof. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein. The claimed invention corresponds to fig. 1, 4 and to the related text in the description. The remaining figures and the text of the description are intended to better explain the invention.

Fig. 1 illustrates a block diagram of an embodiment of a method 10 for determining a representation of a radio environment of a mobile transceiver. The method 10 comprises determining 12 information on one or more active transceivers in the environment of the mobile transceiver and generating 14 a grid of the radio environment of the mobile transceiver, the grid comprising a plurality of adjoining cells. The method further comprises indicating 16 an activity of the one or more active transceivers per cell in the grid.

In order to predict future service availability and QoS, it may be crucial to have a sound understanding of the radio environment. Typical properties of the radio environment may be pathloss, interference conditions, the load of a system, number of frequency carriers, a number of radio access technologies (RATs), etc. The more detailed a radio environment is modelled, the higher the amount of information that is needed for its classification. If information on a radio environment is communicated among transceivers of a mobile communication system, the amount of information needed to represent the radio environment contributes to a signaling load of the system. Embodiments may use an abstraction model, which allows to efficiently communicate and model a radio environment.

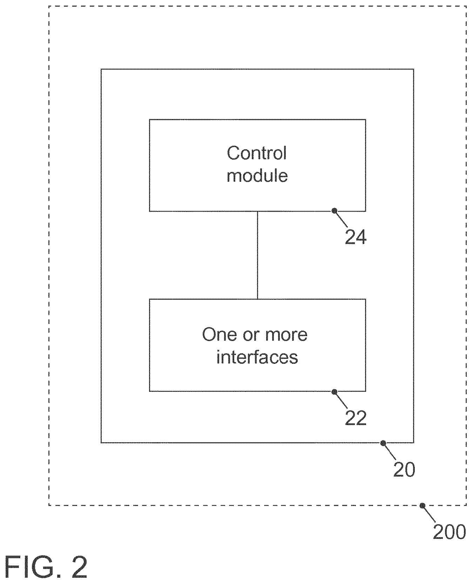

Fig. 2 illustrates a block diagram of an apparatus 20 for determining a representation of a radio environment of a mobile transceiver. The apparatus 20 comprises one or more interfaces 22 for communicating with one or more mobile transceivers or vehicles of a mobile communication system. The apparatus 20 further comprises a control module 24, which is coupled to the one or more interfaces 22, and which is configured to perform one of the methods 10 described herein.

Fig. 2 further depicts as optional components further embodiments of an entity 200, which comprises an embodiment of the apparatus 20. Such an entity 200 could, for example, be a vehicle, a mobile transceiver, or a traffic control entity (e.g. a (smart) traffic light or a control center).

The apparatus 20 and the entity 200 (e.g. the vehicles or entities) may communicate through a mobile communication system. The mobile communication system may, for example, correspond to one of the Third Generation Partnership Project (3GPP)-standardized mobile communication networks, where the term mobile communication system is used synonymously to mobile communication network. The messages (input data, measured data, control information) may hence be communicated through multiple network nodes (e.g. internet, router, switches, etc.) and the mobile communication system, which generates delay or latencies considered in embodiments.

The mobile or wireless communication system may correspond to a mobile communication system of the 5th Generation (5G, or New Radio) and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Service provision may be carried out by a network component, such as a base station transceiver, a relay station or a UE, e.g. coordinating service provision in a cluster or group of multiple UEs/vehicles. A base station transceiver can be operable or configured to communicate with one or more active mobile transceivers/vehicles and a base station transceiver can be located in or adjacent to a coverage area of another base station transceiver, e.g. a macro cell base station transceiver or small cell base station transceiver. Hence, embodiments may provide a mobile communication system comprising two or more mobile transceivers/vehicles 200 and one or more base station transceivers, wherein the base station transceivers may establish macro cells or small cells, as e.g. pico-, metro-, or femto cells. A mobile transceiver or UE may correspond to a smartphone, a cell phone, a laptop, a notebook, a personal computer, a Personal Digital Assistant (PDA), a Universal Serial Bus (USB) -stick, a car, a vehicle, a road participant, a traffic entity, traffic infrastructure etc. A mobile transceiver may also be referred to as User Equipment (UE) or mobile in line with the 3GPP terminology.

A base station transceiver can be located in the fixed or stationary part of the network or system. A base station transceiver may be or correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a gNodeB, a Base Transceiver Station (BTS), an access point, a remote radio head, a relay station, a transmission point, etc., which may be further subdivided in a remote unit and a central unit.

A mobile transceiver or vehicle 200 can be associated with a base station transceiver or cell. The term cell refers to a coverage area of radio services provided by a base station transceiver, e.g. a NodeB (NB), an eNodeB (eNB), a gNodeB, a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

The apparatus 20 may be comprised in a server, a base station, a NodeB, a UE, a relay station, or any service coordinating network entity in embodiments. It is to be noted that the term network component may comprise multiple sub-components, such as a base station, a server, etc.

In embodiments the one or more interfaces 22 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 22 may comprise further components to enable according communication in the mobile communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 22 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the one or more interfaces 22 may serve the purpose of transmitting or receiving or both, transmitting and receiving, information, such as information, input data, control information, further information messages, etc.

As shown in Fig. 2 the respective one or more interfaces 22 is coupled to the respective control module 24 at the apparatus 20. In embodiments the control module 24 may be implemented using one or more processing units, one or more processing devices, any means for processing, such as a processor, a computer or a programmable hardware component being operable with accordingly adapted software. In other words, the described functions of the control module 24 may as well be implemented in software, which is then executed on one or more programmable hardware components. Such hardware components may comprise a general-purpose processor, a Digital Signal Processor (DSP), a micro-controller, etc.

In embodiments, communication, i.e. transmission, reception or both, may take place among mobile transceivers/vehicles 200 directly, e.g. forwarding input data or control information to/from a control center. Such communication may make use of a mobile communication system. Such communication may be carried out directly, e.g. by means of Device-to-Device (D2D) communication. Such communication may be carried out using the specifications of a mobile communication system. An example of D2D is direct communication between vehicles, also referred to as Vehicle-to-Vehicle communication (V2V), car-to-car, Dedicated Short Range Communication (DSRC), respectively. Technologies enabling such D2D-communication include 802.11p, 3GPP systems (4G, 5G, NR and beyond), etc.

In embodiments, the one or more interfaces 22 can be configured to wirelessly communicate in the mobile communication system. In order to do so radio resources are used, e.g. frequency, time, code, and/or spatial resources, which may be used for wireless communication with a base station transceiver as well as for direct communication. The assignment of the radio resources may be controlled by a base station transceiver, i.e. the determination which resources are used for D2D and which are not. Here and in the following radio resources of the respective components may correspond to any radio resources conceivable on radio carriers and they may use the same or different granularities on the respective carriers. The radio resources may correspond to a Resource Block (RB as in LTE/LTE-A/LTE-unlicensed (LTE-U)), one or more carriers, sub-carriers, one or more radio frames, radio sub-frames, radio slots, one or more code sequences potentially with a respective spreading factor, one or more spatial resources, such as spatial sub-channels, spatial precoding vectors, any combination thereof, etc. For example, in direct Cellular Vehicle-to-Anything (C-V2X), where V2X includes at least V2V, V2-Infrastructure (V2I), etc., transmission according to 3GPP Release 14 onward can be managed by infrastructure (so-called mode 3) or run in a UE.

Embodiments may use an abstraction model for the representation of the surrounding communicating/active vehicles (radio environment). This modelling method may map an unbounded number of applications running on an unbounded number of vehicles (or mobile transceivers in general) to a fixed number of pieces of information. In the following embodiments it is assumed that the mobile transceiver is comprised in a vehicle and the one or more active transceivers are further road users. However, in embodiments in general mobile transceivers in a radio environment may be used. There are at least two ways to use the proposed model:
1. Use it as a dissemination format to share the collected information with the surrounding vehicles (new message for sharing information about the communicating environment). The above-described method 10 may then comprise transmitting information on the grid to another transceiver (other vehicle or network entity). Additionally or alternatively, the method 10 may comprise receiving information on a grid from another mobile transceiver.
2. Use it as a way to process un-abstracted information (i.e. raw information, or information that has not been processed and has just been collected or received).

The former may have the advantage of reducing the amount of transmitted data but the disadvantage of not letting operate the projection of the data in the future as the information about the single vehicles (such as speed, trajectory etc.) has been lost in the modelling. The latter has inverse properties, that is that it contains all relevant information but represents a larger amount of data to be transmitted. This dichotomy between option 1 and option 2 is similar to the problem of sending abstract objects or raw sensor data in sensor sharing.

Option one, at least in some embodiments, may be equivalent to the following method 10:
1) Each vehicle collects data about the positions of the other vehicles and the applications that are running on these vehicles along with the properties of these applications (transmission period, message size). The determining 12 of the information may then comprise receiving messages from the one or more active transceivers (other vehicles/ transceivers).
2) Each vehicle may perform the method 10 to format the data in some embodiments.
3) Each vehicle may broadcast the data.
4) Each receiving vehicle may perform a prediction of a link quality of service using the received data.

Option two, at least in some embodiments, may be is equivalent to the following method 10:
1) Each vehicle may collect data about the positions of the other vehicles and the applications that are running on these vehicles along with the properties of these applications (transmission period, message size). The method 10 may then comprise an according message exchange between the vehicles as outlined above.
2) Each vehicle may broadcast the (raw) data.
3) Each receiving vehicle may perform the proposed method 10 on the received data and may run a link quality of service prediction as part of the method 10.

The method 10 may be implemented as a distributed and/or decentralized method 10. For example, it may run on each vehicle equipped with a communication system and information may be exchanged with all the surrounding vehicles. In the following, focus will be on one vehicle, the ego vehicle, that will receive information from all other vehicles.

For example, the ego vehicular node performs the method 10 with the following characteristics of the surrounding vehicles:
- Position (relative or absolute location),
- Planned trajectory (waypoints with timestamps, route reference, i.e. follow a certain road for 10km with the traffic flow, etc.)
- List of transmitted messages with:
   ∘ Type / Size (traffic class, delay tolerance)
   o Periodicity (message frequency)
   o Technology (RAT, frequency, carrier, etc.)

The source of this information can be:
- Deduction through the received messages (if a cooperative awareness message (CAM) and a cooperative perception message (CPM) are received from vehicle X, its position, as well as its two running applications may become known), and
- A specific message (vehicle X transmits a message containing the aforementioned information (position, planned trajectory, list of running applications /running messages).

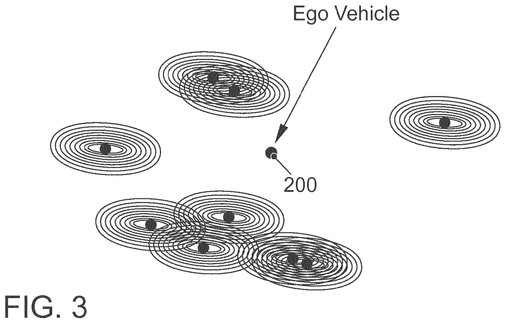

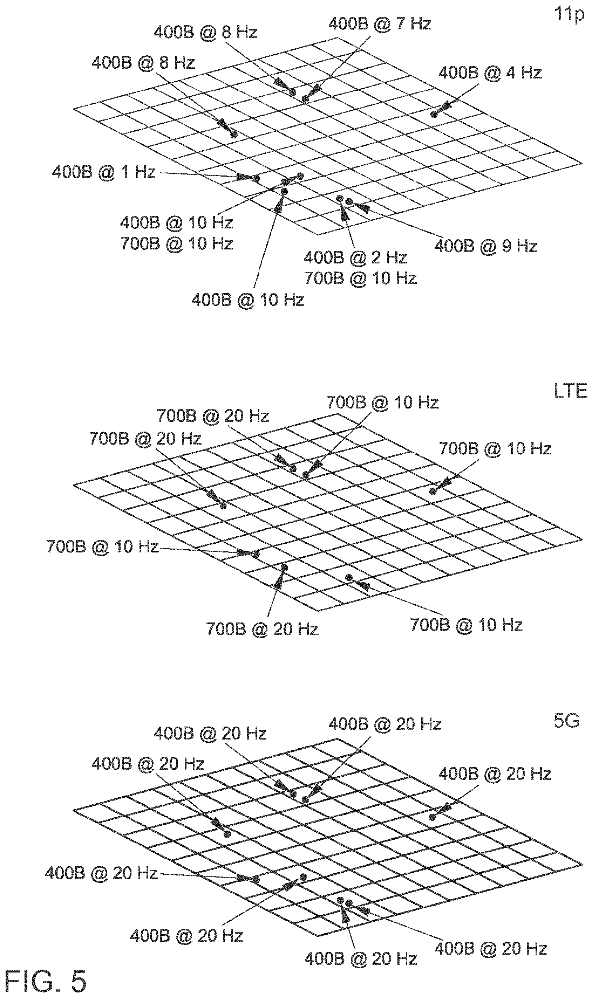

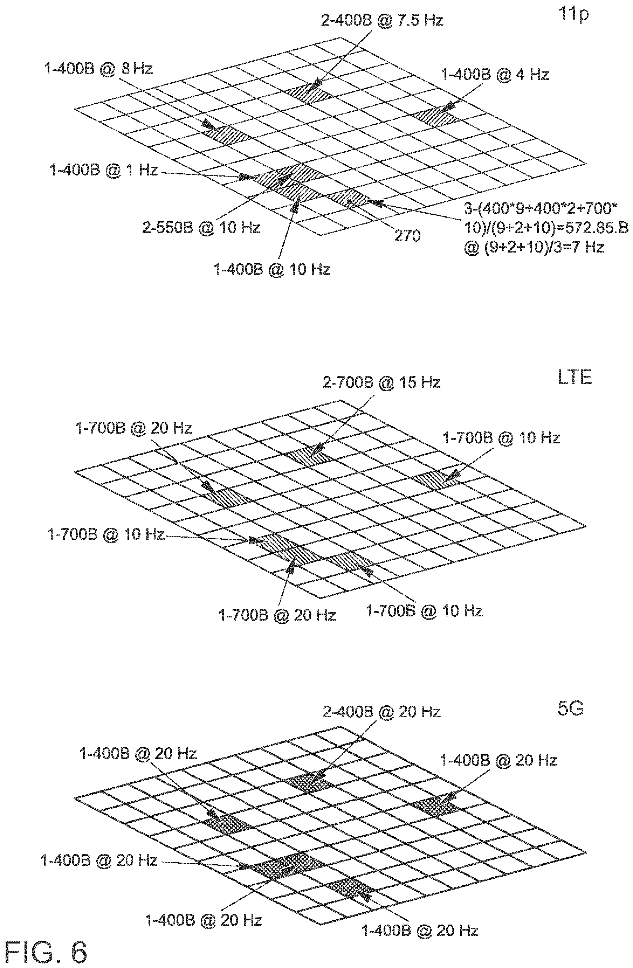

Using this array of inputs, the vehicle may perform the method 10 and may create a multi-layer grid abstraction.
1. It may establish a list of surrounding vehicles and, using the received positions, places these vehicles in a coordinates frame around its own position.
2. It uses a grid like system (e.g. a regular or irregular pattern of cells covering its surrounding) and replaces the surrounding vehicles by multiple applications together with their properties. The indicating 16 comprises assigning the one or more transceivers to one or more cells of the grid based on the locations of the one or more transceivers. Fig. 3 illustrates an initial situation in an embodiment. The ego vehicle 200 considered is shown in the center and it is surrounded by multiple other active transceivers. Fig. 4 illustrates message description and grid separation in an embodiment. In Fig. 4 the vehicle 200 is again shown in the center with the same surrounding transceivers as in Fig. 3. Fig. 4 illustrates a grid 250, which is formed like a mesh of equal-size cells and which determines a limited number of cells surrounding the vehicle. The transceivers in the surrounding are now assigned to cells of the grid 250.
   For instance, if one vehicle X is running three applications, CAM 400B @ 10 Hz on 11p, AM (application A message) 700B @ 10 Hz on 11p, CM (Application C message) 400B @ 20 Hz on 5G, three points will be placed at vehicle X position. This is exemplified in Fig. 4 by transceiver 240. In Fig. 4 aside from the above-mentioned CAM and CPM applications general applications A, B, and C are assumed (with messages AM, BM, CM), which may correspond to any conceivable application. Fig. 4 also illustrates such information sets for the other transceivers. For example, in cell 260, there are two transceivers and their information sets can be merged in some embodiments taking the abstraction level away from the transceiver-level and towards the cell level. In this embodiment of the method 10 the indicating 16 corresponding to the invention, comprises assigning information on a transmission frequency of activity to the cells of the grid (i.e. information on the frequency of the messages, e.g. transceiver 240 transmits 10 CAM messages per second on 802.11p). Moreover, the indicating 16 comprises assigning information on one or more message sizes transmitted by the one or more active transceivers to the cells of the grid (e.g. transceiver 240 transmits 10 CAM messages of 400B each per second on 802.11p).
3. As further shown in Fig. 4 multiple layers can be separated, e.g. one per pair of technology (application and RAT). For example, the indicating 16 may comprise assigning information on frequency bands, RATs, and/or applications of radio activity to the cells of the grid. Fig. 5 illustrates separation of different Radio Access Technologies in an embodiment. Fig. 5 shows three layers of three different RATs, 802.11p at the top, LTE in the middle and 5G at the bottom. In the embodiment shown the grids are the same for each RAT but in further embodiments they may as well be different. Likewise, the multiple layers may be frequency layers.
4. As shown in Fig. 5 each layer is divided in a grid. In embodiments, the method 10 may further comprise counting a number of applications running in each cell and store these numbers along with the average of the periodicity together with the average of the message size, weighted by the sending rates. These two averages describe the channel occupancy at the nodes. This is a further abstraction/compression step in at least some embodiments, where the information is reduced from the vehicle level to the cell level. Fig. 6 illustrates information aggregation per cell in an embodiment. Fig. 6 shows an 802.11p layer at the top, an LTE layer in the middle and a 5G layer at the bottom. An example will be detailed using cell 270 in the 11p layer at the top. For example, there are 3 applications active. The first transmits 400B messages at 9Hz, the second transmits 400B messages at 2Hz, and the third transmits 700B messages at 10Hz. The average message size would then be (400*9+400*2+700*10)/(9+2+10)=542.85B.

The average message frequency would be (9+2+10)/3=7Hz. The indicating 16 may hence comprise assigning average information on message sizes and transmission frequencies of the messages transmitted by the one or more active transceivers to the cells of the grid.

As shown in Fig. 6 this information is used to represent a radio activity of cell 270.

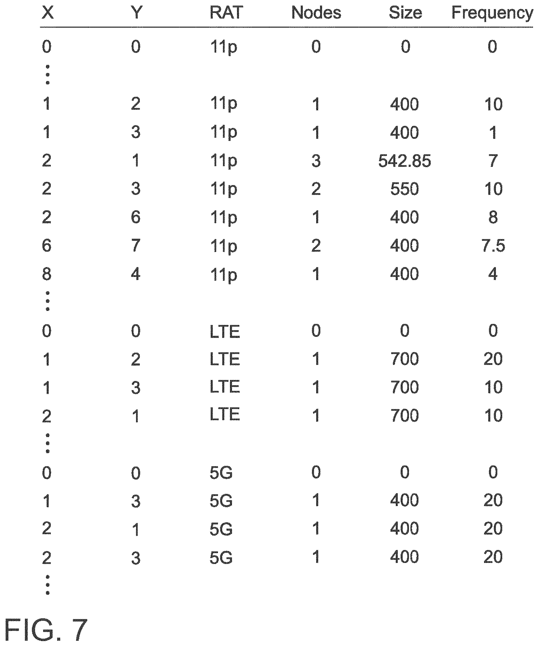

5. In this embodiment, the method 10 gathers the cell information in an array of fixed size, that can be used as input to a prediction model and/or broadcasted. Fig. 7 shows gathered cell information in an embodiment. The table in Fig. 7 comprises coordinates of the cells of the grid (X, Y), the RAT, the number of nodes, an average message size, and an average message frequency.

The resulting multi-layer grid represents the current situation. The determining 12 may comprise determining trajectories for the one or more active users. A future grid may be predicted based on the information on the trajectories of the one or more active users. A future quality of service of a radio service of the mobile transceiver may be further predicted based on the grid. Using the received trajectories as well as the ego trajectory, the model may be projected to describe future communication conditions. This may also be performed for multiple time increments, in which case the two-dimensional (space) array of Fig. 7 may have a third dimension, time.

The embodiments shown in the Figs. present three technologies (11p, LTE, 5G), the concept may as well be applied to single technologies (simple grid aggregation) or to more complex combinations.

Embodiments may solve the problem of large and varying numbers of inputs by reducing the information from the vehicle level to a grid cell level. The number of grid cells being fixed, embodiments may design one single link quality of service prediction method. Because the grid representation still captures the position of the other vehicles relative to the position of the ego vehicle position, the spatial distribution of the surrounding vehicles is described by the grid as well. The spatial distribution of the surrounding communicating vehicles may be a key for the prediction of the link quality of service. Indeed, far away vehicles will not have as much impact as close vehicles. Moreover, depending on the positions of these surrounding nodes and the positions of the transmitter and the receiver, the hidden node problem may have an impact on the quality of service.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions. Moreover, all statements herein reciting principles, aspects, and embodiments of the invention, as well as specific examples thereof, are intended to encompass equivalents thereof. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

### List of reference signs

- 10: method for determining a representation of a radio environment of a mobile transceiver
- 12: determining information on one or more active transceivers in the environment of the mobile transceiver
- 14: generating a grid of the radio environment of the mobile transceiver, the grid comprising a plurality of adjoining cells
- 16: indicating an activity of the one or more active transceivers per cell in the grid
- 20: apparatus for determining a representation of a radio environment of a mobile transceiver
- 22: one or more interfaces
- 24: control module
- 200: mobile transceiver
- 240: transceiver
- 250: grid
- 260: cell
- 270: cell

## Claims

1. A method (10) for determining a representation of a radio environment of a mobile transceiver (200), the method (10) comprising
determining (12) information on one or more active transceivers in the environment of the mobile transceiver;
generating (14) a grid of the radio environment of the mobile transceiver, the grid comprising a plurality of adjoining cells; and
indicating (16) a summarized radio activity of the one or more active transceivers per cell in the grid; wherein the indicating (16) comprises assigning the one or more transceivers to one or more cells of the grid based on the locations of the one or more transceivers and assigning information on frequency bands and/or radio access technologies of radio activity to the cells of the grid,
wherein the indicating (16) comprises assigning average information on messages sizes and transmission frequencies of the messages transmitted by the one or more active transceivers to the cells of the grid.

2. The method (10) of claim 1, wherein the determining (12) of the information comprises receiving messages from the one or more active transceivers.

3. The method (10) of one of the claims 1 to 2, further comprising transmitting and/or receiving information on the grid to or from another transceiver.

4. The method (10) of one of the claims 1 to 3, wherein the indicating (16) comprises assigning information on a transmission frequency of radio activity to the cells of the grid.

5. The method (10) of one of the claims 1 to 4, wherein the indicating (16) comprises assigning information on one or more message sizes transmitted by the one or more active transceivers to the cells of the grid.

6. The method (10) of one of the claims 1 to 5, wherein the mobile transceiver (200) is comprised in a vehicle and wherein the one or more active transceivers are further road users.

7. The method (10) of one of the claims 1 to 6, wherein the determining (12) comprises determining trajectories for the one or more active users.

8. The method (10) of claim 7 further comprising predicting a future grid based on the information on the trajectories of the one or more active users.

9. The method (10) of one of the claims 1 to 8, further comprising predicting a future quality of service of a radio service of the mobile transceiver (200) based on the grid.

10. A computer program having a program code for performing one of the methods (10) according to one of the previous claims, when the computer program is executed on a computer, a processor, or a programmable hardware component.

11. An apparatus (20) for a mobile transceiver (200) of a mobile communication system, the apparatus comprising
one or more interfaces (22) for communicating in a mobile communication system; and
a control module (24) configured to carry out one of the methods of claims 1 to 9.

12. A vehicle (200) comprising the apparatus (20) of claim 11.

## Patentansprüche

1. Verfahren (10) zum Bestimmen einer Darstellung einer Funkumgebung eines Mobilsendeempfängers (200), das Verfahren (10) umfassend
Bestimmen (12) von Informationen über einen oder mehrere aktive Sendeempfänger in der Umgebung des Mobilsendeempfängers;
Erzeugen (14) eines Rasters der Funkumgebung des Mobilsendeempfängers, das Raster umfassend eine Vielzahl von aneinandergrenzenden Zellen; und
Angeben (16) einer zusammengefassten Funkaktivität des einen oder der mehreren aktiven Sendeempfänger pro Zelle in dem Raster; wobei das Angeben (16) ein Zuweisen des einen oder der mehreren Sendeempfänger zu einer oder mehreren Zellen des Rasters basierend auf den Standorten des einen oder der mehreren Sendeempfänger und das Zuweisen von Informationen über Frequenzbänder und/oder Funkzugangstechnologien der Funkaktivität zu den Zellen des Rasters umfasst,
wobei das Angeben (16) das Zuweisen von Durchschnittsinformationen über Nachrichtengrößen und Sendefrequenzen der Nachrichten, die durch den einen oder die mehreren aktiven Sendeempfänger gesendet werden, zu den Zellen des Rasters umfasst.

2. Verfahren (10) nach Anspruch 1, wobei das Bestimmen (12) der Informationen ein Empfangen von Nachrichten von dem einen oder den mehreren aktiven Sendeempfängern umfasst.

3. Verfahren (10) nach einem der Ansprüche 1 bis 2, ferner umfassend ein Senden und/oder das Empfangen von Informationen über das Raster an oder von einem anderen Sendeempfänger.

4. Verfahren (10) nach einem der Ansprüche 1 bis 3, wobei das Angeben (16) das Zuweisen von Informationen über eine Sendefrequenz der Funkaktivität zu den Zellen des Rasters umfasst.

5. Verfahren (10) nach einem der Ansprüche 1 bis 4, wobei das Angeben (16) das Zuweisen von Informationen über eine oder mehrere Nachrichtengrößen, die durch den einen oder die mehreren aktiven Sendeempfänger gesendet werden, zu den Zellen des Rasters umfasst.

6. Verfahren (10) nach einem der Ansprüche 1 bis 5, wobei der Mobilsendeempfänger (200) in einem Fahrzeug enthalten ist und wobei der eine oder die mehreren aktiven Sendeempfänger weitere Verkehrsteilnehmer sind.

7. Verfahren (10) nach einem der Ansprüche 1 bis 6, wobei das Bestimmen (12) das Bestimmen von Trajektorien für den einen oder die mehreren aktiven Teilnehmer umfasst.

8. Verfahren (10) nach Anspruch 7, ferner umfassend ein Vorhersagen eines zukünftigen Rasters basierend auf den Informationen über die Trajektorien des einen oder der mehreren aktiven Teilnehmer.

9. Verfahren (10) nach einem der Ansprüche 1 bis 8, ferner umfassend das Vorhersagen einer zukünftigen Dienstgüte eines Funkdienstes des Mobilsendeempfängers (200) basierend auf dem Raster.

10. Computerprogramm, das einen Programmcode aufweist, zum Durchführen eines der Verfahren (10) nach einem der vorstehenden Ansprüche, wenn das Computerprogramm auf einem Computer, einem Prozessor oder einer programmierbaren Hardwarekomponente ausgeführt wird.

11. Einrichtung (20) für einen Mobilsendeempfänger (200) eines Mobilkommunikationssystems, die Einrichtung umfassend
eine oder mehrere Schnittstellen (22) zum Kommunizieren in einem Mobilkommunikationssystem; und
ein Steuermodul (24), das konfiguriert ist, um eines der Verfahren nach den Ansprüchen 1 bis 9 vorzunehmen.

12. Fahrzeug (200), umfassend die Einrichtung (20) nach Anspruch 11.

## Revendications

1. Procédé (10) permettant de déterminer une représentation d'un environnement radio d'un émetteur-récepteur mobile (200), le procédé (10) comprenant
la détermination (12) d'informations sur un ou plusieurs émetteurs-récepteurs actifs dans l'environnement de l'émetteur-récepteur mobile ;
la génération (14) d'une grille de l'environnement radio de l'émetteur-récepteur mobile, la grille comprenant plusieurs cellules contiguës ; et
l'indication (16) d'une activité radio résumée du ou des émetteurs-récepteurs actifs par cellule dans la grille ; dans lequel l'indication (16) comprend l'attribution du ou des émetteurs-récepteurs à une ou plusieurs cellules de la grille sur la base des emplacements du ou des émetteurs-récepteurs et l'attribution d'informations sur des bandes de fréquence et/ou des technologies d'accès radio de l'activité radio aux cellules de la grille,
dans lequel l'indication (16) comprend l'attribution d'informations moyennes sur les tailles des messages et les fréquences de transmission des messages transmis par le ou les émetteurs-récepteurs actifs aux cellules de la grille.

2. Procédé (10) selon la revendication 1, dans lequel la détermination (12) des informations comprend la réception de messages provenant du ou des émetteurs-récepteurs actifs.

3. Procédé (10) selon l'une des revendications 1 à 2, comprenant en outre la transmission et/ou la réception d'informations sur la grille à destination ou en provenance d'un autre émetteur-récepteur.

4. Procédé (10) selon l'une des revendications 1 à 3, dans lequel l'indication (16) comprend l'attribution d'informations sur une fréquence de transmission de l'activité radio aux cellules de la grille.

5. Procédé (10) selon l'une des revendications 1 à 4, dans lequel l'indication (16) comprend l'attribution d'informations sur une ou plusieurs tailles de message transmises par le ou les émetteurs-récepteurs actifs aux cellules de la grille.

6. Procédé (10) selon l'une des revendications 1 à 5, dans lequel l'émetteur-récepteur mobile (200) est compris dans un véhicule et dans lequel le ou les émetteurs-récepteurs actifs sont d'autres usagers de la route.

7. Procédé (10) selon l'une des revendications 1 à 6, dans lequel la détermination (12) comprend la détermination de trajectoires pour le ou les utilisateurs actifs.

8. Procédé (10) selon la revendication 7 comprenant en outre la prévision d'une grille future sur la base des informations relatives aux trajectoires du ou des utilisateurs actifs.

9. Procédé (10) selon l'une des revendications 1 à 8, comprenant en outre la prévision d'une qualité de service future d'un service radio de l'émetteur-récepteur mobile (200) sur la base de la grille.

10. Programme informatique ayant un code de programme permettant de réaliser l'un des procédés (10) selon l'une des revendications précédentes, lorsque le programme informatique est exécuté sur un ordinateur, un processeur, ou un composant matériel programmable.

11. Appareil (20) pour un émetteur-récepteur mobile (200) d'un système de communication mobile, l'appareil comprenant
une ou plusieurs interfaces (22) pour communiquer dans un système de communication mobile ; et
un module de commande (24) configuré pour réaliser l'un des procédés selon les revendications 1 à 9.

12. Véhicule (200) comprenant l'appareil (20) selon la revendication 11.
